# EUROPÄISCHE PATENTANMELDUNG

(11) **EP 4 269 836 A1**
(43) Veröffentlichungstag der Anmeldung: **01.11.2023**
(21) Anmeldenummer: 23170004.8
(22) Anmeldetag: 26.04.2023
(51) Int. Cl.: F16H 57/02, B60B 35/00, B60B 35/12, B60B 35/16, B60K 1/00

(54) **ELEKTRISCH ANTREIBBARE LENKACHSE UND FAHRZEUG**

(30) Priorität: 27.04.2022 DE 102022204059
(71) Anmelder: ZF Friedrichshafen AG, 88046 Friedrichshafen (DE)
(72) Erfinder: Pfeffer, Andreas, 94234 Viechtach (DE); Reitinger, Franz, 4092 Esternberg (AT); Mühlbauer, Alexander, 94575 Windorf (DE); Brilka, Tobias, 94547 Iggensbach (DE)
(74) Vertreter: ZF Friedrichshafen AG

(57) **Zusammenfassung**

Die Erfindung betrifft ein Elektrisch antreibbare Lenkachse (10), umfassend ein Achsgehäuse (11), einen Elektromotor (12), ein Getriebe (13), ein Differential (14) mit einer ersten Ausgangswelle (18) und einer zweiten Ausgangswelle (18'), einen ersten Radkopf (15), einen zweiten Radkopf (16) sowie ein Lenkgestänge (17, 17`, 17"), wobei der Elektromotor (12) über das Getriebe (13) und das Differential (14) mit dem ersten Radkopf (15) und mit dem zweiten Radkopf (16) triebverbunden ist. Die erfindungsgemäße Lenkachse (10), zeichnet sich dadurch aus, dass der Elektromotor (12), das Getriebe (13) und das Differential (14) koaxial zur ersten Ausgangswelle (18) und zur zweiten Ausgangswelle (18') angeordnet sind. Die Erfindung betrifft weiterhin ein entsprechendes Fahrzeug.

## Beschreibung

Die vorliegende Erfindung betrifft eine elektrisch antreibbare Lenkachse gemäß dem Oberbegriff von Anspruch 1 sowie ein entsprechendes Fahrzeug.

Im Stand der Technik sind elektrisch angetriebene Fahrzeuge, wie etwa allradgetriebene Lkws, Kräne, Radpanzer, Sonderfahrzeuge bekannt. Diese elektrisch angetriebenen Fahrzeuge sind entweder rein elektrisch angetrieben, d.h. sie verfügen für ihre Energieversorgung ausschließlich über eine elektrische Batterie bzw. einen elektrischen Akkumulator, oder aber sie sind diesel-elektrisch angetrieben, was bedeutet, dass die benötigte Energie von einem dieselgetriebenen Generator, üblicherweise in Verbindung mit einem elektrischen Pufferspeicher, wie z.B. einem entsprechend dimensionierten Kondensator, bereitgestellt wird. In allen Fällen wird die für den Fahrantrieb bzw. den Arbeitsantrieb benötigte mechanische Leistung von einem oder mehreren Elektromotoren erbracht. Der Fahrantrieb erfolgt typischerweise über eine antreibbare Achse bzw. eine lenkbare antreibbare Achse, die in oder an einem Achskörper ein oder mehrere Getriebe sowie eine Bremse umfasst. Ein Antrieb der Achse erfolgt dabei durch Einleiten einer Drehzahl und eines Drehmoments von außerhalb des Achskörpers.

In diesem Zusammenhang ist aus der noch unveröffentlichten DE 10 2021 203 416.0 der Anmelderin ein Getriebe für einen PKW bekannt, umfassend eine Eingangswelle, eine Ausgangswelle, zwei koaxial zur Eingangswelle angeordnete Planetenradsätze sowie zwei Bremsen. Die Eingangswelle treibt die Sonnenräder der Planetengetriebe an, während die Ausgangswelle von den Planetenträgern angetrieben wird. Über die zwei Bremsen können die Hohlräder der Planetengetriebe an einem drehfesten Bauteil festgesetzt werden. Das Getriebe der DE 10 2021 203 416.0 kann beispielsweise für eine lenkbare Vorderachse verwendet werden.

Die AT 522 897 A1 beschreibt eine elektrische Achse für Heavy Duty Anwendungen. Die elektrische Achse umfasst zwei Elektromotoren, ein zumindest zweistufiges Planetengetriebe und zwei Ausgangswellen. Die Elektromotoren sind dabei auf gegenüberliegenden Seiten der zwei Ausgangswellen angeordnet und über das zweistufige Planetentgetriebe mit den Ausgangswellen verbunden.

Die bekannten elektrisch antreibbaren Achsen sind jedoch dahingehend nachteilig, als dass sie aufgrund ihrer Bauform ein hohes Gesamtgewicht und einen hohen Bauraumbedarf aufweisen. Zudem reduziert sich durch das Einleiten eines Drehmoments bzw. einer Drehzahl von außerhalb des Achskörpers in die Achse der Wirkungsgrad.

Es ist eine Aufgabe der Erfindung, eine verbesserte elektrisch antreibbare Lenkachse vorzuschlagen.

Diese Aufgabe wird erfindungsgemäß durch die elektrisch antreibbare Lenkachse gemäß Anspruch 1 gelöst. Vorteilhafte Ausgestaltungen und Weiterbildungen der Erfindung gehen aus den abhängigen Ansprüchen hervor.

Die Erfindung betrifft eine elektrisch antreibbare Lenkachse, umfassend ein Achsgehäuse, einen Elektromotor, ein Getriebe, ein Differential mit einer ersten Ausgangswelle und einer zweiten Ausgangswelle, einen ersten Radkopf, einen zweiten Radkopf sowie ein Lenkgestänge, wobei der Elektromotor über das Getriebe und das Differential mit dem ersten Radkopf und mit dem zweiten Radkopf triebverbunden ist. Die erfindungsgemäße Lenkachse zeichnet sich dadurch aus, dass der Elektromotor, das Getriebe und das Differential koaxial zur ersten Ausgangswelle und zur zweiten Ausgangswelle angeordnet sind.

Die Erfindung beschreibt also eine elektrisch antreibbare Lenkachse, die zumindest aus den folgenden Elementen besteht: Achsgehäuse, Elektromotor, Getriebe, Differential, erste und zweite Ausgangswelle, erster und zweiter Radkopf sowie Lenkgestänge.

Das Achsgehäuse stellt dabei eine Art Grundgerüst der Lenkachse dar, an bzw. in dem alle der genannten und ggf. weitere Elemente angeordnet sind. Durch diese Anordnung im bzw. am Achsgehäuse handelt es sich vorteilhaft um eine starre Achse bzw. eine Starrachse.

Der Elektromotor kann als Synchron- oder als Asynchronmaschine ausgebildet sein, insbesondere als dreiphasige Synchron- oder als dreiphasige Asynchronmaschine.

Dem Elektromotor ist vorteilhaft ein Inverter zugeordnet, der elektrischen Gleichstrom, welcher vorzugsweise von einer elektrischen Batterie bereitgestellt wird, in zur Ansteuerung bzw. zum Betrieb des Elektromotors geeigneten Wechselstrom umrichtet.

Das Getriebe ist bevorzugt als schaltbares und mindestens zweistufiges Getriebe ausgebildet, so dass bedarfsweise eine geeignete Übersetzung des vom Elektromotor bereitgestellten und in das Getriebe eingeleiteten Drehmoments sowie der vom Elektromotor bereitgestellten und in das Getriebe eingeleiteten Drehzahl eingestellt werden kann.

Das Differential verfügt bevorzugt über eine Eingangswelle, über welche die vom Getriebe gewandelte Drehzahl und das vom Getriebe gewandelte Drehmoment in das Differential eingeleitet werden können. Die eingeleitete Drehzahl und das eingeleitete Drehmoment werden im Differential nach Maßgabe eines Drehwiderstands der ersten und der zweiten Ausgangswelle auf die erste und die zweite Ausgangswelle verteilt.

Die erste Ausgangswelle des Differentials verbindet das Differential trieblich mit dem ersten Radkopf und die zweite Ausgangswelle des Differentials verbindet das Differential trieblich mit dem zweiten Radkopf. Der erste und der zweite Radkopf umfassen vorteilhaft jeweils eine Radnabe und eine Radwelle zur Aufnahme eines Rads. Weiterhin umfassen der erste und der zweite Radkopf vorteilhaft auch jeweils eine Schwenklagerung, um Lenkbewegungen der Radnabe und der Radwelle ausführen zu können.

Der erste und der zweite Radkopf sind außerdem über das Lenkgestänge mechanisch derart verbunden, dass eine Lenkbewegung des ersten Radkopfs auf den zweiten Radkopf übertragen wird, vorteilhaft unter Einhaltung der sog. Ackermann-Bedingung. Das Lenkgestänge wird bevorzugt über einen dem Lenkgestänge zugeordneten elektrischen Lenkmotor betätigt. Alternativ bevorzugt ist auch eine hydraulische Betätigung des Lenkgestänges denkbar.

Ein vom Elektromotor erzeugtes Drehmoment bzw. eine vom Elektromotor erzeugte Drehzahl werden über eine Motorwelle des Elektromotors in das Getriebe eingeleitet, dort nach Maßgabe einer eingelegten Gangstufe gewandelt und ausgegeben. Das gewandelte Drehmoment und die gewandelte Drehzahl werden über eine Ausgangswelle des Getriebes bzw. eine Eingangswelle des Differentials in das Differential eingeleitet und vom Differential auf die erste und die zweite Ausgangswelle verteilt. Die erste und die zweite Ausgangswelle treiben dann den ersten und zweiten Radkopf bzw. deren Radwelle an.

Erfindungsgemäß ist es nun vorgesehen, dass der Elektromotor, das Getriebe und das Differential koaxial zur ersten Ausgangswelle und zur zweiten Ausgangswelle angeordnet sind. Daraus ergibt sich der Vorteil, dass die erfindungsgemäße Lenkachse ein vergleichsweise geringes Gesamtgewicht aufweist und einen ebenfalls nur vergleichsweise geringen Bauraumbedarf aufweist, insbesondere gegenüber einer parallelen Anordnung des Elektromotors zur ersten Ausgangswelle und zur zweiten Ausgangswelle. Zudem verbessert sich durch die genannte koaxiale Anordnung auch der Wirkungsgrad der Lenkachse, da auf ein bei einer parallelen Anordnung erforderliches zusätzliches Stirnradpaar zur Überwindung des Achsabstands verzichtet werden kann. Zudem ermöglicht die erfindungsgemäße Lenkachse auf einfache Weise die Realisierung eines Allradantriebs in einem die Lenkachse aufweisenden Fahrzeug, beispielsweise einer Arbeitsmaschine, insbesondere einer geländegängigen Arbeitsmaschine, eines allradgetriebenen Lkws, Krans, Radpanzers oder Sonderfahrzeugs.

Gemäß einer bevorzugten Ausführungsform der Erfindung ist es vorgesehen, dass eine Motorwelle des Elektromotors, eine Eingangswelle des Getriebes, eine Ausgangswelle des Getriebes und eine Eingangswelle des Differentials als Hohlwellen ausgebildet sind. Dies begünstigt eine koaxiale Anordnung des Elektromotors, des Getriebes und des Differentials zu den Ausgangswellen.

Gemäß einer besonders bevorzugten Ausführungsform der Erfindung ist es vorgesehen, dass die erste Ausgangswelle und die zweite Ausgangswelle in den Hohlwellen angeordnet sind. Die erste bzw. die zweite Ausgangswelle sind somit durch den Elektromotor bzw. durch das Getriebe hindurchgeführt und stellen gleichermaßen die Längsachse des Elektromotors, des Getriebes und des Differentials dar.

Gemäß einer weiteren bevorzugten Ausführungsform der Erfindung ist es vorgesehen, dass der Elektromotor, das Getriebe und das Differential in einem gemeinsamen Gehäuse angeordnet sind. Daraus ergibt sich der Vorteil einer nochmals kompakteren und bauraumsparenderen Anordnung des Elektromotors, des Getriebes und des Differentials in der Lenkachse, da nicht mehrere unterschiedliche Einzelgetriebe vorgesehen werden müssen. Vorteilhaft ist das Getriebe dabei zwischen dem Elektromotor auf der Eingangsseite des Getriebes und dem Differential auf der Ausgangsseite des Getriebes angeordnet.

Gemäß einer besonders bevorzugten Ausführungsform der Erfindung ist es vorgesehen, dass das gemeinsame Gehäuse gleichermaßen ein Bestandteil des Achsgehäuses ist. Das bedeutet, dass zumindest ein Teil der Außenwandung des gemeinsamen Gehäuses auch ein Teil der Außenwandung des Achsgehäuses ist. Dadurch kann die erfindungsgemäße Lenkachse nochmals gewichtssparender ausgebildet sein, da das gemeinsame Gehäuse nicht nochmal seinerseits vom Achsgehäuse eingehaust ist. Stattdessen kann das gemeinsame Gehäuse beispielsweise einen axial in etwa mittigen Bestandteil des Achsgehäuses bilden, an den sich beidseitig jeweils ein weiterer Achsgehäusebestandteil anschließt.

Gemäß einer weiteren bevorzugten Ausführungsform der Erfindung ist es vorgesehen, dass dem ersten Radkopf eine erste Scheibenbremse zugeordnet ist und dem zweiten Radkopf eine zweite Scheibenbremse zugeordnet ist. Scheibenbremsen erfordern vergleichsweise wenig Bauraum und weisen ein vergleichsweise geringes Gewicht auf. Somit kann jeder der zwei Radköpfe also individuell gebremst werden, ohne dass die Lenkachse dadurch merklich schwerer wird.

Gemäß einer alternativ bevorzugten Ausführungsform der Erfindung ist es vorgesehen, dass dem ersten Radkopf eine erste Trommelbremse zugeordnet ist und dem zweiten Radkopf eine zweite Trommelbremse zugeordnet ist. Anstelle der Scheibenbremsen kann den Radköpfen auch jeweils eine Trommelbremse zugeordnet sein, wodurch sich ebenfalls eine individuelle Bremsbarkeit der Radköpfe ergibt.

Gemäß einer weiteren bevorzugten Ausführungsform der Erfindung ist es vorgesehen, dass das Getriebe als Planetengetriebe ausgebildet ist. Ein Planetengetriebe ist vergleichsweise kompakt und zur Übertragung auch sehr hoher Drehmomente geeignet. Zudem kann ein Planetengetriebe durch Ausbildung des Sonnenrads als Hohlwelle auf einfache Weise koaxial um die erste bzw. zweite Ausgangswelle herum angeordnet werden.

Gemäß einer weiteren bevorzugten Ausführungsform der Erfindung ist es vorgesehen, dass die Lenkachse weiterhin eine dem Differential zugeordnete Differentialsperre umfasst. Über eine Betätigung der Differentialsperre kann das Differential somit nach Maßgabe der Betätigung teilweise oder ganz gesperrt werden kann.

Die Erfindung betrifft weiterhin ein Fahrzeug, umfassend mindestens eine erfindungsgemäße Lenkachse. Daraus ergeben sich die bereits beschrieben Vorteile auch für das erfindungsgemäße Fahrzeug.

Bevorzugt kann das Fahrzeug auch mehr als nur eine erfindungsgemäße Lenkachse aufweisen, wobei jede weitere Lenkachse nach der ersten Lenkachse als sog. Nachlaufachse verwendet wird. Eine Lenkwinkeleinstellung der Nachlaufachsen kann dabei vorteilhaft über einen geeigneten Software-Algorithmus in Abhängigkeit der jeweiligen Fahrzeuggeometrie und des jeweils eingestellten Lenkwinkels der ersten Lenkachse vorgegeben werden. Eine aufwändige mechanische Verbindung der Lenkachsen ist somit nicht erforderlich.

Weiterhin bevorzugt ist es vorgesehen, dass das Fahrzeug als allradgetriebener Lkw, Kran, Radpanzer, Sonderfahrzeug, Radlader, Dumper, Bagger, Teleskoplader oder Traktor ausgebildet ist.

Nachfolgend wird die Erfindung anhand von in den Figuren dargestellten Ausführungsformen beispielhaft erläutert.

Es zeigt:

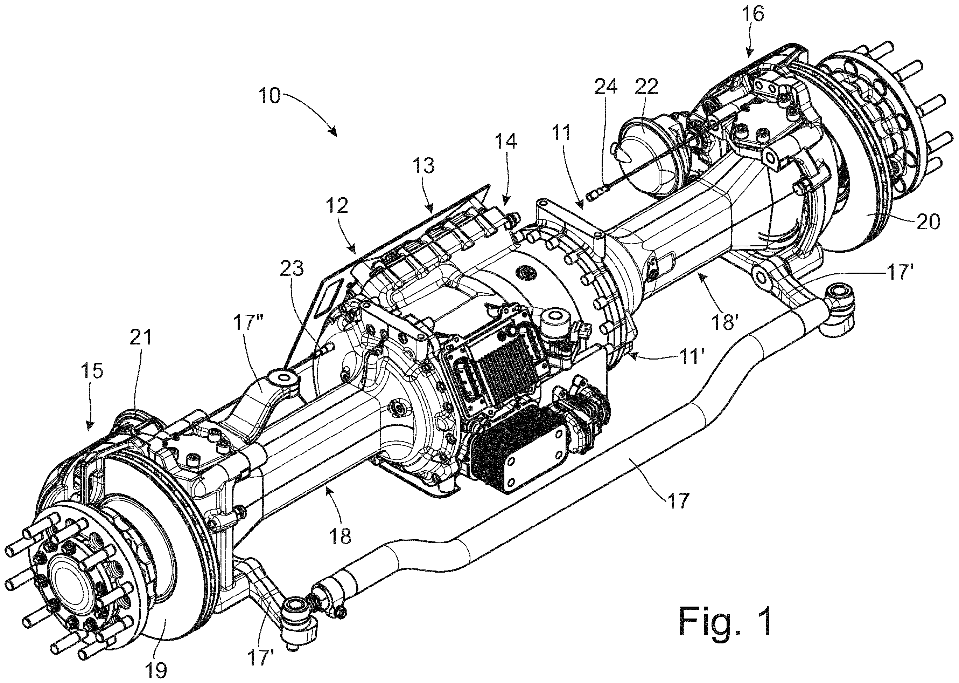

- Fig. 1: beispielhaft und schematisch eine mögliche Ausführungsform einer erfindungsgemäßen elektrisch antreibbaren Lenkachse.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

Fig. 1 zeigt beispielhaft und schematisch eine mögliche Ausführungsform einer erfindungsgemäßen elektrisch antreibbaren Lenkachse 10. Die Lenkachse 10 umfasst ein Achsgehäuse 11, einen Elektromotor 12, ein Getriebe 13, ein Differential 14 mit einer ersten Ausgangswelle 18 und einer zweiten Ausgangswelle 18`, einen ersten Radkopf 15, einen zweiten Radkopf 16 sowie ein Lenkgestänge 17, 17', 17". Die Lenkachse 10 ist eine Starrachse 10.

Der Elektromotor 12, das Getriebe 13 und das Differential 14 sind dabei in einem gemeinsamen Gehäuse 11' angeordnet, welches einen axial mittigen Bestandteil des Achsgehäuses 11 darstellt. Im gemeinsamen Gehäuse 11' ist der Elektromotor 12 in der Darstellung der Fig. 1 ganz links angeordnet und seine Motorwelle (nicht dargestellt in Fig. 1) weist nach recht. Über die Motorwelle des Elektromotors 12 bzw. über eine Eingangswelle (ebenfalls nicht dargestellt in Fig. 1) des Getriebes 13 leitet der Elektromotor 12 ein Drehmoment und eine Drehzahl in das Getriebe 13 ein. Beispielsgemäß sind die Motorwelle des Elektromotors 12 und die Eingangswelle des Getriebes 13 identisch bzw. einstückig ausgebildet. Das Getriebe 13 ist in der Darstellung der Fig. 1 unmittelbar rechts vom Elektromotor 12 angeordnet und als zweistufiges Planetengetriebe 13 ausgebildet. Das Getriebe 13 wandelt das Drehmoment und die Drehzahl und führt sie über eine Ausgangswelle (nicht dargestellt in Fig. 1) des Getriebes 13 und eine Eingangswelle (ebenfalls nicht dargestellt in Fig. 1) des Differentials 14 in das Differential 14. Auch die Ausgangswelle des Getriebes 13 und die Eingangswelle des Differentials 14 sind beispielsgemäß identisch bzw. einstückig ausgebildet. Das Differential 14 umfasst beispielsgemäß eine Differenzialsperre (nicht dargestellt in Fig. 1) und verteilt das eingeleitete Drehmoment sowie die eingeleitete Drehzahl über die erste Ausgangswelle 18 und die zweite Ausgangswelle 18` zum ersten Radkopf 15 und zum zweiten Radkopf 16. Die erste Ausgangswelle 18 und die zweite Ausgangswelle 18` sind in der Darstellung der Fig. 1 durch das Achsgehäuse 11 verdeckt. Somit ist also der Elektromotor 12 über das Getriebe 13, das Differential 14 sowie die erste bzw. zweite Ausgangswelle 18, 18' mit dem ersten bzw. zweiten Radkopf 15, 16 triebverbunden.

Um Bauraum und Gewicht zu sparen sowie die Effizienz der Lenkachse 10 zu verbessern, sind der Elektromotor 12, das Getriebe 13 und das Differential 14 koaxial zur ersten Ausgangswelle 18 und zur zweiten Ausgangswelle 18` im Achsgehäuse 11 angeordnet. Um die koaxiale Anordnung des Elektromotors 12, des Getriebes 13 und des Differentials 14 um die erste Ausgangswelle 18 und die zweite Ausgangswelle 18' herum zu ermöglichen, sind die Motorwelle des Elektromotors 12, die Eingangswelle des Getriebes 13, die Ausgangswelle des Getriebes 13 und die Eingangswelle des Differentials 14 jeweils als Hohlwellen ausgebildet, durch welche die die erste Ausgangswelle 18 bzw. die zweite Ausgangswelle 18' hindurchgeführt sind.

Der erste Radkopf 15 und der zweite Radkopf 16 weisen jeweils eine Schwenklagerung auf, um eine Lenkbewegung zu ermöglichen. Das Lenkgestänge 17, 17', 17" verbindet den ersten Radkopf 15 mit dem zweiten Radkopf 16 derart, dass eine Lenkbewegung des ersten Radkopfs 15 unter Einhaltung der Ackermann-Bedingung auf den zweiten Radkopf 16 übertragen wird. Im Einzelnen besteht das Lenkgestänge 17, 17', 17" aus einer Spurstange 17, zwei Spurhebeln 17' und einem Lenkhebel 17". Der Lenkhebel wird nach Maßgabe eines Lenkeinschlags eines Lenkrads von einem elektrischen Lenkmotor (nicht dargestellt in Fig. 1) betätigt.

Dem ersten Radkopf 15 ist zudem eine erste Scheibenbremse 19 zugeordnet ist und dem zweiten Radkopf 16 ist eine zweite Scheibenbremse 20 zugeordnet. Die erste Scheibenbremse 19 umfasst einen ersten Ausgleichsbehälter 21 für Bremsflüssigkeit und die zweite Scheibenbremse 20 umfasst einen zweiten Ausgleichsbehälter 22 für Bremsflüssigkeit. Zudem ist dem ersten Radkopf 15 ein erster Drehzahlsensor 23 zugeordnet und dem zweiten Radkopf 16 ist ein zweiter Drehzahlsensor 24 zugeordnet.

### Bezugszeichen

- 10: Lenkachse, Starachse
- 11: Achsgehäuse
- 11': gemeinsames Gehäuse
- 12: Elektromotor
- 13: Getriebe, Planetengetriebe
- 14: Differential
- 15: erster Radkopf
- 16: zweiter Radkopf
- 17: Spurstange, Lenkgestänge
- 17': Spurhebel, Lenkgestänge
- 17": Lenkhebel, Lenkgestänge
- 18: erste Ausgangswelle
- 18': zweite Ausgangswelle
- 19: erste Scheibenbremse
- 20: zweite Scheibenbremse
- 21: erster Ausgleichsbehälter
- 22: zweiter Ausgleichsbehälter
- 23: erster Drehzahlsensor
- 24: zweiter Drehzahlsensor

## Patentansprüche

1. Elektrisch antreibbare Lenkachse (10), umfassend ein Achsgehäuse (11), einen Elektromotor (12), ein Getriebe (13), ein Differential (14) mit einer ersten Ausgangswelle (18) und einer zweiten Ausgangswelle (18'), einen ersten Radkopf (15), einen zweiten Radkopf (16) sowie ein Lenkgestänge (17, 17', 17"), wobei der Elektromotor (12) über das Getriebe (13) und das Differential (14) mit dem ersten Radkopf (15) und mit dem zweiten Radkopf (16) triebverbunden ist,
**dadurch gekennzeichnet, dass** der Elektromotor (12), das Getriebe (13) und das Differential (14) koaxial zur ersten Ausgangswelle (18) und zur zweiten Ausgangswelle (18') angeordnet sind.

2. Lenkachse (10) nach Anspruch 1,
**dadurch gekennzeichnet, dass** eine Motorwelle des Elektromotors (12), eine Eingangswelle des Getriebes (13), eine Ausgangswelle des Getriebes (13) und eine Eingangswelle des Differentials (14) als Hohlwellen ausgebildet sind.

3. Lenkachse (10) nach Anspruch 2,
**dadurch gekennzeichnet, dass** die erste Ausgangswelle (18) und die zweite Ausgangswelle (18') in den Hohlwellen angeordnet sind.

4. Lenkachse (10) nach mindestens einem der Ansprüche 1 bis 3,
**dadurch gekennzeichnet, dass** der Elektromotor (12), das Getriebe (13) und das Differential (14) in einem gemeinsamen Gehäuse (11') angeordnet sind.

5. Lenkachse (10) nach Anspruch 4,
**dadurch gekennzeichnet, dass** das gemeinsame Gehäuse (11') gleichermaßen ein Bestandteil des Achsgehäuses (11) ist.

6. Lenkachse (10) nach mindestens einem der Ansprüche 1 bis 5,
**dadurch gekennzeichnet, dass** dem ersten Radkopf (15) eine erste Scheibenbremse (19) zugeordnet ist und dem zweiten Radkopf (16) eine zweite Scheibenbremse (20) zugeordnet ist.

7. Lenkachse (10) nach mindestens einem der Ansprüche 1 bis 5,
**dadurch gekennzeichnet, dass** dem ersten Radkopf (15) eine erste Trommelbremse zugeordnet ist und dem zweiten Radkopf (16) eine zweite Trommelbremse zugeordnet ist.

8. Lenkachse (10) nach mindestens einem der Ansprüche 1 bis 7,
**dadurch gekennzeichnet, dass** das Getriebe (13) als Planetengetriebe (13) ausgebildet ist.

9. Lenkachse (10) nach mindestens einem der Ansprüche 1 bis 8,
**dadurch gekennzeichnet, dass** die Lenkachse (10) weiterhin eine dem Differential (14) zugeordnete Differentialsperre umfasst.

10. Fahrzeug, umfassend mindestens eine Lenkachse (10) nach mindestens einem der Ansprüche 1 bis 9.
